# EUROPEAN PATENT APPLICATION

(11) **EP 4 002 062 A1**
(43) Date of publication of application: **25.05.2022**
(21) Application number: 20840907.8
(22) Date of filing: 02.07.2020
(51) Int. Cl.: G06F 1/3218

(54) **DISPLAY METHOD AND APPARATUS, ELECTRONIC DEVICE, AND COMPUTER-READABLE MEDIUM**

(30) Priority: 17.07.2019 CN 201910647562
(71) Applicant: GUANGDONG OPPO MOBILE TELECOMMUNICATIONS CORP., LTD., Dongguan, Guangdong 523860 (CN)
(72) Inventor: HU, Jie, Dongguan, Guangdong 523860 (CN); ZHOU, Haitao, Dongguan, Guangdong 523860 (CN)
(74) Representative: Taor, Simon Edward William
(86) International application number: PCT/CN2020/099807
(87) International publication number: WO 2021/008373

(57) **Abstract**

Disclosed are a display method and apparatus, an electronic device, and a computer-readable storage medium, relating to the technical field of image processing. The method comprises: acquiring layers to be synthesized (S101), wherein the layers to be synthesized comprise an interface layer of a video playing interface, and a multimedia layer corresponding to a video played on the video playing interface; calling a graphics processing unit to synthesize the interface layer to obtain a layer to be mixed (S102); calling a multimedia display processor to synthesize the multimedia layer and the layer to be mixed to obtain a target image (SI03); and displaying the target image on the video playing interface (SI04). By means of respectively calling different processors to synthesize the layers to be synthesized, power consumption caused by superposition of a plurality of layers can be reduced, and the speed of layer synthesis is improved, thereby enabling an image synthesis method to be more rational.

## Description

### CROSS REFERENCE TO RELATED APPLICATIONS

This application claims the priority to Chinese patent application No. 201910647562.8, filed before China National Intellectual Property Administration (CNIPA) on July 17, 2019 and titled with "a display method and device, an electronic device, and a computer-readable medium", the content of which is incorporated herein by reference in its entirety.

### TECHNICAL FIELD

The present disclosure relates to the technology field of video processing, and more particularly to a display method and device, an electronic device, and a computer-readable medium.

### BACKGROUND

With the development of electronic technology and information technology, more and more devices can play videos. In the process of playing a video by a device, it is necessary to perform operations, such as decoding, rendering, and synthesizing, on the video, and then the video is displayed on a display screen. A graphics processor (graphics processing unit, GPU) or a multimedia display processor (MDP) can be used for performing image synthesis operations. However, in the conventional video playback technology, the image synthesis methods are not reasonable enough.

### SUMMARY OF DISCLOSURE

The present disclosure provides a display method and device, an electronic device, and a computer-readable medium to improve the above-mentioned deficiencies.

In a first aspect, an embodiment of the present disclosure provides a display method for an electronic device. The electronic device includes a multimedia display processor and a graphics processor. The method includes: obtaining a layer to be synthesized, wherein the layer to be synthesized comprises an interface layer of a video playback interface and a multimedia layer corresponding to a video used for being played in the video playback interface; obtaining a layer to be mixed by calling the graphics processor to synthesize the interface layer; obtaining a target image by calling the multimedia display processor to synthesize the multimedia layer and the layer to be mixed; and displaying the target image on the video playback interface.

In a second aspect, an embodiment of the present disclosure provides a display device for an electronic device. The electronic device includes a multimedia display processor and a graphics processor. The device includes: an image obtaining module configured to obtain a layer to be synthesized, wherein the layer to be synthesized comprises an interface layer of a video playback interface and a multimedia layer corresponding to a video used for being played in the video playback interface; a first synthesis module configured to obtain a layer to be mixed by calling the graphics processor to synthesize the interface layer; a second synthesis module configured to obtain a target image by calling the multimedia display processor to synthesize the multimedia layer and the layer to be mixed; and an image display module configured to display the target image on the video playback interface.

In a third aspect, an embodiment of the present disclosure provides an electronic device including: one or more processors; a memory; a graphics processor; a multimedia display processor; and one or more application programs, wherein the one or more application programs are stored in the memory and configured to be executed by the one or more processors, and the one or more programs are configured to execute the above-mentioned method.

In a fourth aspect, an embodiment of the present disclosure provides a computer-readable medium. The computer-readable medium includes program codes stored thereon. The program codes are invoked by a processor to execute the above-mentioned method.

Compared with the prior art, the display method and device, the electronic device, and the computer-readable medium call different processors according to layer types of a layer to be mixed to perform a synthesis operation when the layer to be mixed is obtained. Specifically, the graphics processor is called to synthesize the interface layer to obtain the layer to be mixed. The multimedia display processor is called to synthesize the multimedia layer and the layer to be mixed to obtain the target image. Power consumption of the multimedia display processor is lower. As such, by calling different processors to synthesize the layer to be synthesized, power consumption of superimposing multiple layers can be saved, and a layer synthesis speed can be increased. Accordingly, an image synthesis method is more reasonable.

### BRIEF DESCRIPTION OF DRAWINGS

In order to illustrate the technical solutions in the embodiments of the present disclosure more clearly, the drawings used in the description of the embodiments are briefly described below. It is obvious that the drawings in the following description are only some embodiments of the present disclosure. For those skilled in the art, other drawings can also be obtained from these drawings without any creative effort.
FIG 1 illustrates a logical framework diagram of image processing provided by an embodiment of the present disclosure.
FIG. 2 illustrates a flowchart of a display method provided by an embodiment of the present disclosure.
FIG. 3 illustrates a layer to be mixed in a display method provided by an embodiment of the present disclosure.
FIG. 4 illustrates a flowchart of a display method provided by another embodiment of the present disclosure.
FIG. 5 illustrates a flowchart of a display method provided by yet another embodiment of the present disclosure.
FIG. 6 illustrates a flowchart of calling a multimedia display processor to perform a synthesis operation provided by an embodiment of the present disclosure.
FIG. 7 illustrates a multimedia layer in a display method provided by an embodiment of the present disclosure.
FIG. 8 illustrates a module block diagram of a display device provided by an embodiment of the present application.
FIG. 9 illustrates a structural block diagram of an electronic device provided by an embodiment of the present disclosure.
FIG. 10 illustrates a storage unit for storing or carrying program codes to implement a display method according to an embodiment of the present disclosure.

### DETAILED DESCRIPTION OF EMBODIMENTS

In order to better understand the disclosure for those skilled in the art, the technical solutions in the embodiments of the present disclosure are clearly and completely described in the following with reference to the accompanying drawings in the embodiments of the present disclosure.

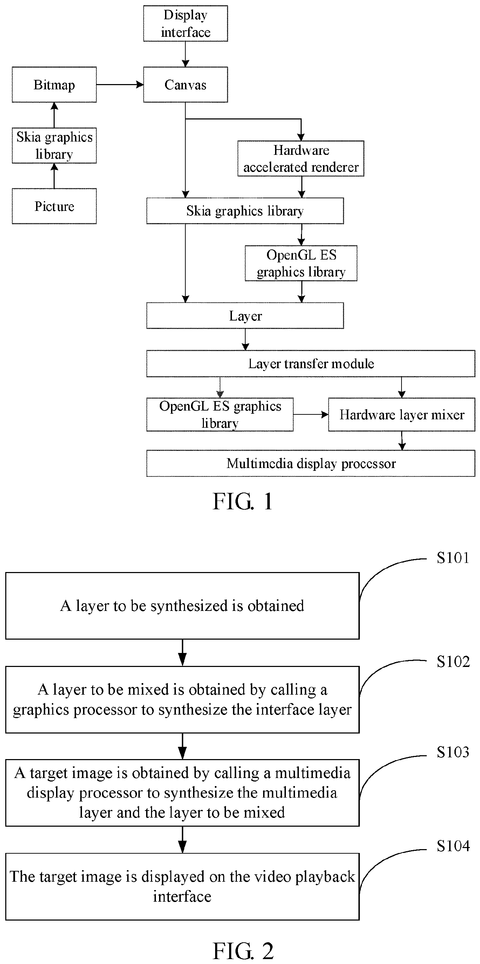

Refer to FIG. 1, which illustrates a logical framework diagram of image processing provided by an embodiment of the present disclosure.

An application can create a window through a Windows Manager. The Window Manager creates a surface for each window for drawing various elements required to be displayed. Each surface corresponds to a layer. That is, a layer can be drawn on each surface.

In a display interface (such as Activity), a plurality of layers can be included, such as a navigation bar, a status bar, a program interface and so on. Each layer is drawn on a corresponding surface. That is, a corresponding layer is drawn on each surface. Specifically, layer drawing can be performed on a canvas provided by a surface through a hardware accelerated renderer (HWUI) and/or a Skia graphics library.

A system uses a layer transfer module (SurfaceFlinger) service to synthesize each surface, that is, to synthesize each layer. The SurfaceFlinger service runs in a process of the system and is configured to uniformly manage a frame buffer (FrameBuffer) of the system. The SurfaceFlinger obtains all layers and can use a graphics processor (Graphics Processing Unit, GPU) to synthesize the layers. A synthesized result is stored into the frame buffer.

In the embodiment of the present disclosure, the GPU can synthesize all or a part of the layers. When the GPU synthesizes some layers in a display interface to be displayed, a hardware layer mixer (hardware composer, HWC) can synthesize the result of the SurfaceFlinger synthesized by the GPU with other layers. Specifically, as shown in FIG. 1, the HWC can call a Multimedia Display Processor (MDP) to synthesize the layer in the frame buffer which is obtained after the GPU synthesizes with at least one layer which is not synthesized. Finally, a Buffer is formed in a BufferQueue, and then a synthesized image in the Buffer is displayed under the action of a display driver.

Accordingly, an electronic device can synthesize layers through an MDP, synthesize layers through a GPU, or synthesize layers through a combination of the MDP and the GPU.

Currently, in terms of layer synthesis, power consumption of superimposing multiple layers is high. The inventors found in the research that a reason for the high-power consumption of superimposing multiple layers is that the GPU is a general graphics processor which can perform 2D image processing, 3D image processing, special effects and so on. Accordingly, the GPU is commonly used for image synthesis, and the power consumption is high. As such, endurance of the electronic device is affected.

Refer to FIG. 2. In order to solve the above-mentioned defects, an embodiment of the present disclosure provides a display method. The display method is for an electronic device. The method is used for reasonably setting an image synthesis strategy, thereby saving the power consumption of superimposing multiple layers and increasing an image synthesis speed. Specifically, the method includes S101 to S104.

In S101, a layer to be synthesized is obtained.

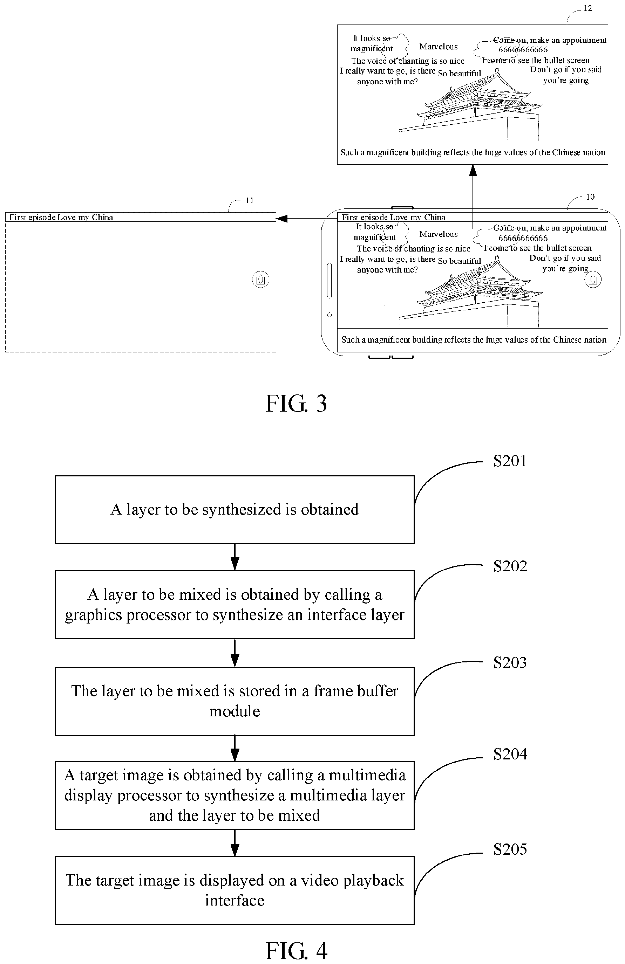

The layer to be synthesized includes layers corresponding to a current image which is required to be displayed on a screen of the electronic device. Specifically, the layer to be synthesized includes an interface layer of a video playback interface and a multimedia layer corresponding to a video used for being played in the video playback interface. As shown in FIG. 3, a current interface displayed on the screen is a video playback interface 10 of a video client. The interface layer and the multimedia layer of the client are displayed in the video playback interface. The interface layer is a layer used for displaying an operation interface of the client. Specifically, the interface layer can be a layer including various UIs in the client, such as a layer 11. The multimedia layer is a layer, such as a layer 12, corresponding to the video played on the video playback interface. Specifically, the multimedia layer can be a layer including various parts of video playback content, such as bullet screens, subtitles, or video images. Normally, the interface layer is a static layer, and the multimedia layer is a dynamic layer. That is, in the current interface of the client, an image in the multimedia layer might be changed, but an image in the interface layer is generally not changed. For example, the current client is a video APP. An image of the video playback content is displayed in an area of the multimedia layer of the client, and data in the image of the video playback content is changed with the change of the video playback content. The multimedia layer in a current frame of image displayed on the screen is different from the multimedia layer in a last frame. A video frame image played in the last frame might be different from a video frame image played in the current frame. However, the interface layer in the current frame of image is the same as the interface layer in the last frame of image.

Accordingly, when the client determines the content to be displayed, it can determine the layers corresponding to the displayed content, so that the layers can be rendered and combined for display.

In S102, a layer to be mixed is obtained by calling a graphics processor to synthesize the interface layer.

The graphics processor can be a GPU. The GPU is a general graphics processor having powerful graphics processing functions. In addition to 2D image processing, the GPU can further perform 3D image processing, special effects and so on and can superimpose multiple layers at one time. Because data amount of the interface layer is small, the power consumption required by the graphics processor to synthesize the interface layer is also small. Moreover, by calling the GPU to synthesize the interface layer first, a number of layers required to be superimposed in a next synthesis step can be reduced, and a number of layers required to be superimposed at one time in the following step can be reduced. As such, high-power consumption does not occur.

In S103, a target image is obtained by calling a multimedia display processor to synthesize the multimedia layer and the layer to be mixed.

The target image is an image corresponding to the layer to be synthesized which has been synthesized. Specifically, the layer to be synthesized includes the layers corresponding to the current image which is required to be displayed on the screen of the electronic device. The target image is the current image which is required to be displayed on the screen of the electronic device, that is, the image which is obtained after the layer to be synthesized has been synthesized. As shown in FIG. 3, the current image displayed on the screen is the video playback interface of the video client. The interface layer and the multimedia layer of the video client are displayed on the video playback interface. By synthesizing the layers on the video playback interface, the target image corresponding to the video playback interface can be obtained.

The MDP is a dedicated display image processing unit which can perform conventional two-dimensional image processing. A main advantage is low power consumption, but cost is high. When layers which the MDP can superimpose at one time are more, named pipes (FIFO pipes) which are required inside the MDP are more. In a Qualcomm high-end platform, an MDP has 8 FIFO pipes and can superimpose up to 8 layers at one time. In a Qualcomm middle-end or low-end platform, an MDP has only 4 FIFO pipes and can superimpose up to 4 layers at one time.

For an Android system, a two-dimensional image which a user finally watches is actually superimposed by a plurality of layers, such as a wallpaper layer, a status bar layer, a navigation bar layer, an APP layer, a floating ball layer, a video layer and so on. In different application scenarios, numbers of these layers are different. In some applications, a displayed interface includes only 4 layers, and thus the synthesis can be performed using an MDP. However, in some applications, a displayed interface includes 7 layers or even more, and thus it is impossible to complete the task by relying on only one MDP hardware to perform the superimposed synthesis.

The GPU is a general graphics processor, which is much more powerful than MDP in graphics processing. In addition to 2D image processing, the GPU can further perform 3D image processing, special effects and so on. However, power consumption is relatively high, and a plurality of layers can be superimposed at one time.

The power consumption of the MDP is less than the power consumption of the GPU, but the number of layers which the MDP can superimpose at one time is small. Accordingly, for different layers to be synthesized, a simple interface layer is synthesized by first calling the GPU with higher power consumption, and then the video layer and the layer to be mixed are synthesized by calling the MDP with lower power consumption. As such, the requirement of the number of layers which the MDP can superimpose at one time can be reduced. When the number of FIFO pipes which the MDP can use is limited, the layer synthesis speed can be increased to make the method of synthesizing the layers more reasonable. Furthermore, the endurance of the electronic device is enhanced due to the lower power consumption, and user experience is improved.

In S104, the target image is displayed on the video playback interface.

The target image is the image which is obtained after the layer to be synthesized has been synthesized and is used for being displaying on the video playback interface. The image required to be displayed on the video playback interface is displayed after being synthesized, so as to realize the playback of the video playback content on the video playback interface. Moreover, the user can operate the video playback interface to realize corresponding control effect. For example, during the video playback process, the played video can be paused by clicking the video playback interface. Alternatively, the video playback interface can be locked by clicking a lock control, so as not to respond to a clicking operation of the user.

In the display method provided by the present embodiment, the simple interface layer is synthesized by calling the GPU with higher power consumption first, and then the video layer and the layer to be mixed are synthesized by calling the MDP with lower power consumption. As such, the power consumption of synthesizing the layers can be reduced. Furthermore, when a part of the layer to be synthesized, such as an interface layer, is synthesized by the GPU first and the layer to be mixed which has been synthesized and a video layer are synthesized by the MDP, the requirement of the number of layers which the MDP can superimpose at one time can be reduced. When the number of FIFO pipes which the MDP can use is limited, the layer synthesis speed can be increased to make the method of synthesizing the layers more reasonable. Furthermore, the endurance of the electronic device is enhanced due to the lower power consumption, and user experience is improved.

Refer to FIG. 4, which illustrates a display method provided by an embodiment of the present disclosure. The method is for an electronic device. The method is used for reasonably setting an image synthesis strategy, thereby saving the power consumption of superimposing multiple layers and improving an image synthesis speed. Specifically, the method includes S201 to S205.

In S201, a layer to be synthesized is obtained.

In S202, a layer to be mixed is obtained by calling a graphics processor to synthesize an interface layer.

In S203, the layer to be mixed is stored in a frame buffer module.

The frame buffer module is a frame buffer (FrameBuffer). After the graphics processor is called to synthesize the layer, the synthesized layer can be stored in the frame buffer module. Specifically, the graphics processor is called to synthesize the interface layer to obtain the layer to be mixed, and the layer to be mixed is stored in the frame buffer module.

In S204, a target image is obtained by calling a multimedia display processor to synthesize a multimedia layer and the layer to be mixed.

The MDP synthesizes the layer to be mixed in the frame buffer module which is obtained after the GPU synthesizes and at least one other multimedia layer which is not synthesized to obtain the target image.

In S205, the target image is displayed on a video playback interface.

Under the action of a display driver, the target image in the frame buffer module is displayed on the video playback interface.

It should be noted that parts which are not described in detail in the above-mentioned steps can refer to the above-mentioned embodiment and are not repeated herein.

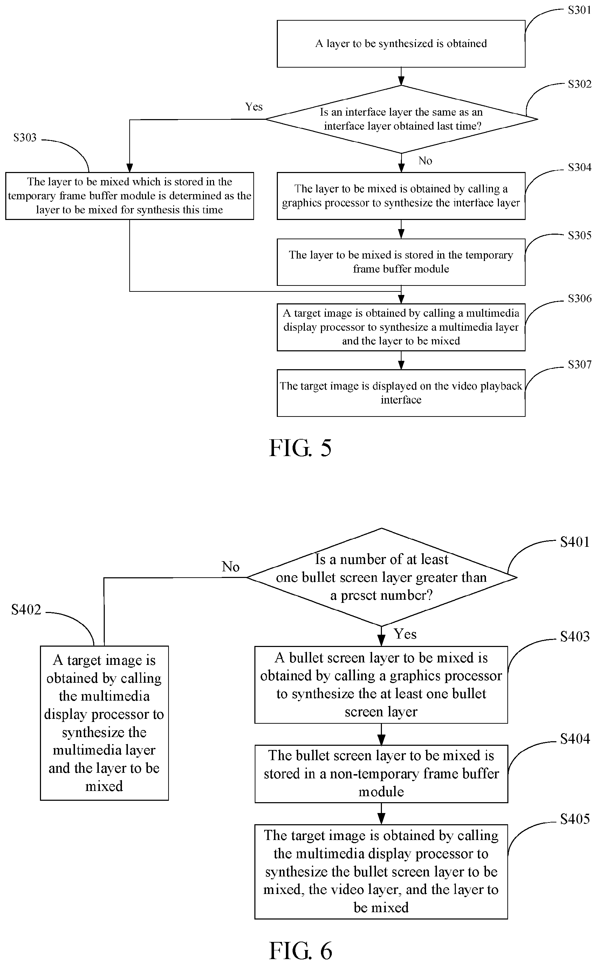

Furthermore, the frame buffer module can include a temporary frame buffer module. After the graphics processor is called to synthesize the interface layer to obtain the layer to be mixed, the layer to be mixed is stored in the temporary frame buffer module. After the target image is displayed on the video playback interface, the layer to be mixed which is stored in the temporary frame buffer module is retained. As such, when the interface layer from a last frame to a current frame is not changed, the layer to be mixed in the last frame stored by the temporary frame buffer module can be determined as the layer to be mixed in the current frame. Accordingly, it is not necessary to synthesize the interface layer the same as the interface in the last frame again to further save the power consumption of superimposing the layer and to increase the layer synthesis speed. Specifically, refer to FIG. 5, which illustrates a display method provided by an embodiment of the present disclosure. The method is for an electronic device. The method is used for reasonably setting an image synthesis strategy, thereby saving the power consumption of superimposing multiple layers and improving an image synthesis speed. Specifically, the method includes S301 to S307.

In S301, a layer to be synthesized is obtained.

In S302, it is judged whether an interface layer is the same as an interface layer obtained last time.

After the interface layer is obtained last time, the interface layer is stored in a specific location, such as a temporary frame buffer module, for judging whether the interface layer obtained last time is the same as the interface layer obtained this time. Furthermore, the interface layer stored this time is also used for being compared with an interface layer obtained next time to judge whether they are the same. As such, before the GPU is called to synthesize the interface layer, it can be judged whether the interface layer obtained this time is required to be synthesized by judging whether the interface layer obtained this time is the same as the interface layer obtained last time. The specific location can be any location in a memory of the electronic device and is not limited thereto. It can be understood that the specific location has a specific address. Specifically, after the interface layer is obtained this time, the interface layer obtained last time is obtained from the specific location and compared to the interface layer this time to judge whether the interface layer is the same as the interface layer obtained last time.

In some embodiments, the electronic device can store not only the interface layer obtained last time but also the interface layers obtained several times before. As such, before the GPU is called to synthesize the interface layer, it can be judged whether the interface layer obtained this time is required to be synthesized by judging whether the interface layer obtained this time is the same as the interface layers obtained several times before. Specifically, as a way, the electronic device can judge whether the interface layer in the layer to be synthesized (that is, the interface layer obtained this time) is the same as a first interface layer. When the interface layer is different from the first interface layer, it continues to judge whether the interface layer is the same as a second interface layer. When the interface layer is different from the second interface layer, the graphics processor can be called to synthesize the interface layer to obtain the image to be mixed. The first interface layer is an interface layer which is obtained before the interface layer obtained this time, and the second interface layer is an interface layer which is obtained before the first interface layer. As such, when the interface layer obtained this time is different from the interface layer obtained last time (that is, the first interface layer) but is the same as the interface layer obtained before the interface layer obtained last time (that is, the second interface layer), it is still not necessary to synthesize the interface layer obtained this time to save the power consumption of synthesizing the layer. In the present embodiment, after it is judged whether the interface layer is the same as the interface layer obtained last time, the method can include:
if yes, S303 can be performed; and
If not, S304 can be performed.

In S303, the layer to be mixed which is stored in the temporary frame buffer module is determined as the layer to be mixed for synthesis this time.

The layer to be mixed which is stored last time is still retained in the temporary frame buffer module after the layer to be mixed is synthesized. That is, the layer to be mixed stored last time is not deleted from the temporary frame buffer module before being synthesized. Accordingly, when the interface layer obtained this time is the same as the interface layer obtained last time, the layer to be mixed which is stored last time is determined as the layer to be mixed which is used for synthesis this time for performing the following synthesis. As such, when the interface layer is unchanged, the layer to be mixed which is stored last time is determined as the layer to be mixed for synthesis this time. A number of synthesizing the same interface can be reduced, and the required power consumption can be correspondingly reduced to save the power consumption of superimposing multiple layers.

In S304, the layer to be mixed is obtained by calling a graphics processor to synthesize the interface layer.

In S305, the layer to be mixed is stored in the temporary frame buffer module.

The layer to be mixed is stored in the temporary frame buffer module. After a target image is displayed on a video playback interface, the layer to be mixed stored in the temporary frame buffer module is retained. As such, the layer to be mixed which is stored in the temporary frame buffer module can be retained after the present synthesis. In a next synthesis, when the interface layer is the same as the interface layer obtained last time, the interface layer obtained last time can be determined as the layer to be mixed for synthesis this time. It is not necessary to synthesize the interface layer obtained this time. As such, when the layer to be mixed is stored in the temporary frame buffer module and the interface layer is unchanged, the layer to be mixed which is stored last time is determined as the layer to be mixed for synthesis this time. The number of synthesizing the same interface can be reduced, and the required power consumption can be correspondingly reduced to save the power consumption of superimposing multiple layers.

As an embodiment, when the interface layer obtained this time is different from the interface layer obtained last time, the graphics processor is called to synthesize the interface layer to obtain the layer to be mixed for synthesis this time, and the layer to be mixed which is stored last time in the temporary frame buffer module is deleted. As such, when the interface layer obtained this time is different from the interface layer obtained last time, the layer to be mixed which is stored last time is replaced with the layer to be mixed which is used for synthesis this time. Storage can be optimized to reduce storage pressure, and the operating efficiency of layer synthesis can be ensured.

As another embodiment, when the interface layer obtained this time is different from the interface layer obtained last time, the graphics processor is called to synthesize the interface layer to obtain the layer to be mixed for synthesis this time. The layer to be mixed which is stored last time in the temporary frame buffer module is not deleted, so that the interface layer obtained next time can be compared to the interface layers obtained last time and this time. As such, when the interface layer obtained next time is the same as the interface layer obtained last time, the layer to be mixed obtained last time can be further determined as the layer to be mixed for synthesis next time.

In an exemplary embodiment, the temporary frame buffer module can store two or more layers to be mixed at the same time. When the interface layer obtained this time is different from the first interface layer but is the same as the second interface layer, the layer to be mixed corresponding to the second interface layer can be further determined as the layer to be mixed for synthesis this time. That is, the interface layer can be compared to not only the interface layer obtained last time but also the interface layers obtained several times before. As such, when the interface layer is changed only in few frames and then is recovered to the original interface layer, it is not necessary to synthesize a new layer to be mixed. The power consumption of superimposing layers can be further saved, and the efficiency of layer synthesis can be increased. Further, when the interface layer obtained next time is compared to the interface layer obtained last time and the interface layer obtained this time, the interface layer obtained next time can be compared to the interface layer obtained this time first. That is, the interface layer obtained next time is compared to the interface layer obtained this time first. Then, the interface layer obtained next time is compared to the interface layer obtained last time when the interface layer obtained next time is different from the interface layer obtained this time. Since the possibility that the interface layer in consecutive frames is not changed is higher than the possibility that the interface layer in consecutive frames is changed, comparing the interface layer obtained next time to the interface layer obtained this time can further increase the efficiency of layer synthesis.

In S306, a target image is obtained by calling a multimedia display processor to synthesize a multimedia layer and the layer to be mixed.

In S307, the target image is displayed on the video playback interface.

It should be noted that parts which are not described in detail in the above-mentioned steps can refer to the above-mentioned embodiments and are not repeated herein.

Furthermore, the multimedia layer includes at least one bullet screen layer and a video layer. Since data volume corresponding to the at least one bullet screen layer is small, the required power consumption for synthesizing the at least one bullet screen layer is small. A number of the at least one bullet screen layers is often larger, and the number of layers which the MDP can superimposes at one time is also limited. Therefore, when the number of the at least one bullet screen layer is large, the GPU can be called to synthesize the at least one bullet screen layer to obtain a bullet screen layer to be mixed, thereby ensuring a layer synthesis speed without excessive power consumption. Specifically, refer to FIG. 6, which illustrates a method of selecting different synthesis strategies according to the number of the at least one bullet screen layer when the multimedia layer and the layer to be mixed are synthesized. The method includes S401 to S405.

In S401, it is judged whether a number of at least one bullet screen layer is greater than a preset number.

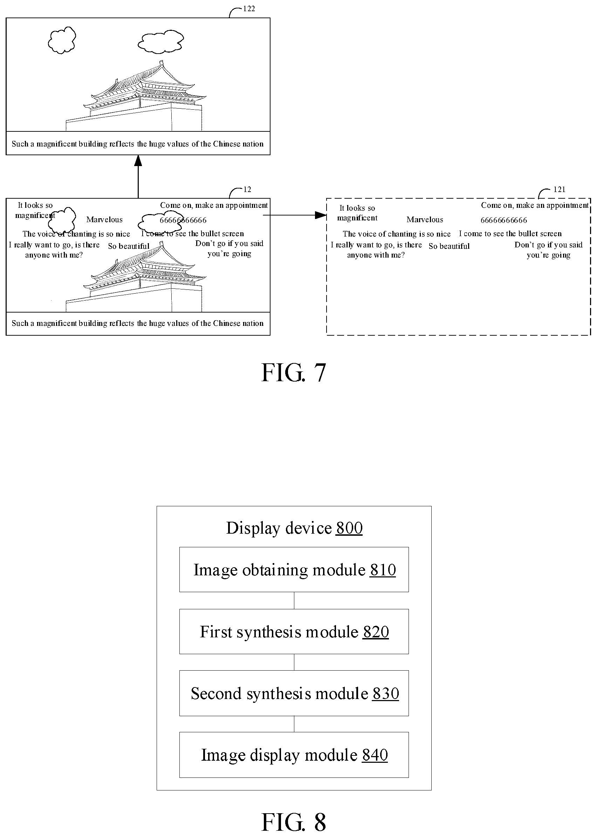

The multimedia layer includes at least one bullet screen layer and a video layer. The at least one bullet screen layer is a layer which contains at least one bullet screen on a video playback interface. The video layer is a layer corresponding to video content of the video playback interface. Specifically, refer to FIG. 7. For example, the multimedia layer 12 includes a bullet screen layer 121 and a video layer 122.

As an embodiment, the number of the at least one bullet screen layer is a number of at least one bullet screen corresponding to a video image obtained this time at this moment. That is, one bullet screen corresponds to one bullet screen layer. At this time, when the number of the at least one bullet screen is more, the number of the at least one bullet screen layer is also more. When the at least one bullet screen is more and synthesized by the multimedia display processor, it is difficult to output the target image in time for display. This is because the number of layers which the MDP can superimpose at one time is limited. Accordingly, when it is judged that the number of the at least one bullet screen is greater than the preset number, the GPU which can superimpose more layers at one time can be called to synthesize the at least one bullet screen layer. The layer synthesis speed can be increased, and the power consumption is not large because the data volume of the at least one bullet screen layer is small.

In one embodiment, the preset number can be set according to the number of FIFO pipes of the MDP. Specifically, the preset number can be equal to or less than the number of the FIFO pipes of the MDP to judge whether the number of the at least one bullet screen layer is greater than the preset number. When the number is greater than or close to the number of the FIFO pipes, the GPU can be called to synthesize the at least one bullet screen layer. As such, in the situation that the number of layers which the MDP can superimpose at one time is limited, layer synthesis can be performed more reasonably to ensure the synthesis speed and avoid that the user experience is affected when the MDP cannot complete the synthesis in a frame of image in time.

In another embodiment, the preset number can be determined according to a number of idle FIFO pipes of the MDP. Specifically, the preset number can be equal to or less than the number of the idle FIFO pipes of the MDP to judge whether the number of the at least one bullet screen layer is greater than the preset number. When the number is greater than or close to the number of the idle FIFO pipes, the GPU can be called to synthesize the at least one bullet screen layer. When the number of the at least one bullet screen layer is smaller than the number of the idle FIFO pipes, the MDP can be called to synthesize the at least one bullet screen layer. As such, in the situation that the number of layers which the MDP can superimpose at one time is limited, layer synthesis can be performed more reasonably to ensure the lower power consumption and the synthesis speed.

In another embodiment, the preset number can also be set arbitrarily, such as 8, 3 and son on and is not limited herein.

In the present embodiment, after it is judged whether the number of the at least one bullet screen layer is greater than the preset number, the method can include:
If not, S402 can be performed; and
If yes, S403 can be performed.

In S402, a target image is obtained by calling the multimedia display processor to synthesize the multimedia layer and the layer to be mixed.

As an embodiment, when the number of the at least one bullet screen layer is not greater than the preset number, the multimedia display processor can be called to synthesize the multimedia layer and the layer to be mixed to obtain the target image. That is, when the number is not large, the MDP can still be called to synthesize to save the power consumption of superimposing the layers.

As another embodiment, when the number of the at least one bullet screen is not greater than the preset number, the synthesis strategy for the at least one bullet screen can be selected according to the number of the FIFO pipes of the multimedia display processor. For example, when the idle FIFO pipes of the MDP is not less than the number of the at least one bullet screen, the MDP can be called to synthesize the at least one bullet screen layer. When the number of the idle FIFO pipes of the MDP is less than the number of the at least one bullet screen layer, the GPU can be called to synthesize the at least one bullet screen layer.

Further, as a way, the GPU can be called to synthesize all bullet screen layers, thereby improving the layer synthesis speed. As another way, the GPU can be called to synthesize at least one bullet screen layer more than the number of the idle FIFO pipes, and the MDP is called to synthesize the remaining bullet screen layers. For example, when the number of the idle pipes is 2 and the number of the at least one bullet screen layer is 3, the GPU can be called to synthesize an extra one layer and the MDP is called to synthesize two bullet screen layers, so as to fully use the idle FIFO pipes and save the power consumption of superimposing the layers. Furthermore, since the MDP can be used for synthesizing on the basis of synthesis which the MDP can superimpose as much as possible, it can avoid excessive power consumption.

In S403, a bullet screen layer to be mixed is obtained by calling a graphics processor to synthesize the at least one bullet screen layer.

When the number of the at least one bullet screen layer is greater than the preset number, the graphics processor can be called to synthesize the at least one bullet screen layer to obtain the at least one bullet screen layer to be mixed. In one embodiment, the preset number is set according to the number of the FIFO pipes of the MDP, such as 4, 7 and so on. When the number of the at least one bullet screen layer is greater than the preset number, it is difficult for synthesizing layers by the MDP in time and it is difficult to display an image on the video playback interface in time for a user to watch. Therefore, when the number of the at least one bullet screen layer is greater than the preset number, the GPU which can superimpose more layers at one time is called to synthesize to increase the synthesis speed. The target image can be synthesized in time and displayed on the video playback interface to ensure the user experience of watching the video. Furthermore, the data volume of the at least one bullet screen layer is small, and the excessive power consumption of calling the GPU for synthesis is not caused.

In S404, the bullet screen layer to be mixed is stored in a non-temporary frame buffer module.

The frame buffer module can further include the non-temporary frame buffer module. The layer stored in the non-temporary frame buffer module is deleted after the present synthesis. The bullet screen is dynamically changed. For example, at least one new bullet screen is generated, or a bullet screen is scrolling in the video playback interface. Accordingly, the bullet screen layer in a last frame and the bullet screen layer in a current frame are different. Therefore, by storing the bullet screen layer to be mixed in the non-temporary frame buffer module and deleting, after the present synthesis, the bullet screen layer to be mixed in the present synthesis from the non-temporary frame buffer module, the requirements for the temporary frame buffer module can be reduced, and the operating efficiency of the MDP can be increased.

In S405, the target image is obtained by calling the multimedia display processor to synthesize the bullet screen layer to be mixed, the video layer, and the layer to be mixed.

In one embodiment, the layer to be mixed is obtained from the temporary frame buffer module, and the bullet screen layer to be mixed in the non-temporary frame buffer module, the video layer, and the layer to be mixed are synthesized to obtain the final target image to be displayed. Then, the target image is displayed on the video playback page.

In the present embodiment, the bullet screen layer and the video layer are separately processed. The GPU is called to process the at least one bullet screen layer with a small amount of data to obtain the bullet screen layer to be mixed, and then the MDP is called to synthesize the bullet screen layer to be mixed, the video layer, and the layer to be mixed to obtain the target image. As such, on the basis of the above-mentioned embodiment, the layer synthesis speed can be ensured without increasing excessive power consumption.

It should be noted that parts which are not described in detail in the above-mentioned steps can refer to the above-mentioned embodiments and are not repeated herein.

Furthermore, the frame buffer module can further include the non-temporary frame buffer module. When the number of the at least one bullet screen layer is greater than the preset number, the GPU is called to synthesize the at least one bullet screen layer to obtain the bullet screen to be mixed and the bullet screen to be mixed is stored in the non-temporary frame buffer module. After the target image is displayed on the video playback interface, the layer stored in the non-temporary frame buffer module is deleted. Since the bullet screen layer in a last frame and the bullet screen layer in a current frame are often different, deleting, in the present synthesis, the bullet screen layer to be mixed which is stored in the last frame can reduce the storage requirements for the temporary frame buffer module and increase the operating efficiency of the MDP.

Refer to FIG. 8, which illustrates a structural block diagram of a display device provided by an embodiment of the present disclosure. The display device 800 can include: an image obtaining module 810, a first synthesis module 820, a second synthesis module 830, and an image display module 840.

The image obtaining module 810 is configured to obtain a layer to be synthesized. The layer to be synthesized includes an interface layer of a video playback interface and a multimedia layer corresponding to a video used for being played in the video playback interface.

The first synthesis module 820 is configured to obtain a layer to be mixed by calling a graphics processor to synthesize the interface layer.

The second synthesis module 830 is configured to obtain a target image by calling a multimedia display processor to synthesize the multimedia layer and the layer to be mixed.

The image display module 840 is configured to display the target image on the video playback interface.

Further, the display device 800 further includes a first storage module.

The first storage module is configured to store the layer to be mixed in a frame buffer module.

Further, the frame buffer module includes a temporary frame buffer module. The first storage module includes a first storage unit and a layer retention unit.

The first storage unit is configured to store the layer to be mixed in the temporary frame buffer module.

The layer retention unit is configured to retain the layer to be mixed stored in the temporary frame buffer module after the target image is displayed on the video playback interface.

Further, the first synthesis module includes a first judging unit and a first synthesis unit.

The first judging unit is configured to judge whether the interface layer is the same as an interface layer obtained last time.

The first synthesis unit is configured to obtain the layer to be mixed by calling the graphics processor to synthesize the interface layer when the interface layer is different from the interface layer obtained last time.

Further, the first synthesis module further includes a first determining unit.

The first determining unit is configured to determine the layer to be mixed which is stored in the temporary storage frame buffer module last time as the layer to be mixed which is used for synthesis this time when the interface layer is different from the interface layer obtained last time.

Further, the multimedia layer includes at least one bullet screen layer and a video layer. The second synthesis module includes a second judging unit, a second synthesis unit, and a third synthesis unit.

The second judging unit is configured to judge whether a number of the at least one bullet screen layer is greater than a preset number.

The second synthesis unit is configured to obtain a bullet screen layer to be mixed by calling the graphics processor to synthesize the at least one bullet screen layer when the number of the at least one bullet screen layer is greater than the preset number.

The third synthesis unit is configured to obtain the target image by calling the multimedia display processor to synthesize the bullet screen layer to be mixed, the video layer, and the layer to be mixed.

Further, the frame buffer module includes a non-temporary frame buffer module. The second synthesis unit includes:
a second storage subunit configured to store the bullet screen layer to be mixed in the non-temporary frame buffer module; and
a layer deletion subunit configured to delete the layer stored in the non-temporary frame buffer module after the target image is displayed on the video playback interface.

Those skilled in the art can clearly understand that for the convenience and conciseness of description, the specific working process of the above-mentioned device and modules can refer to the corresponding process in the above-mentioned method embodiments and are not repeated herein.

In the embodiments provided by the present disclosure, the coupling between any two modules can be electrical, mechanical or include other forms of coupling.

Furthermore, functional modules provided by the embodiments of the present disclosure can be integrated into one processing unit, or each of the modules can exist alone physically, or two or more modules are integrated into one module. The integrated module can be implemented in a form of hardware, or can be implemented in a form of a software functional module.

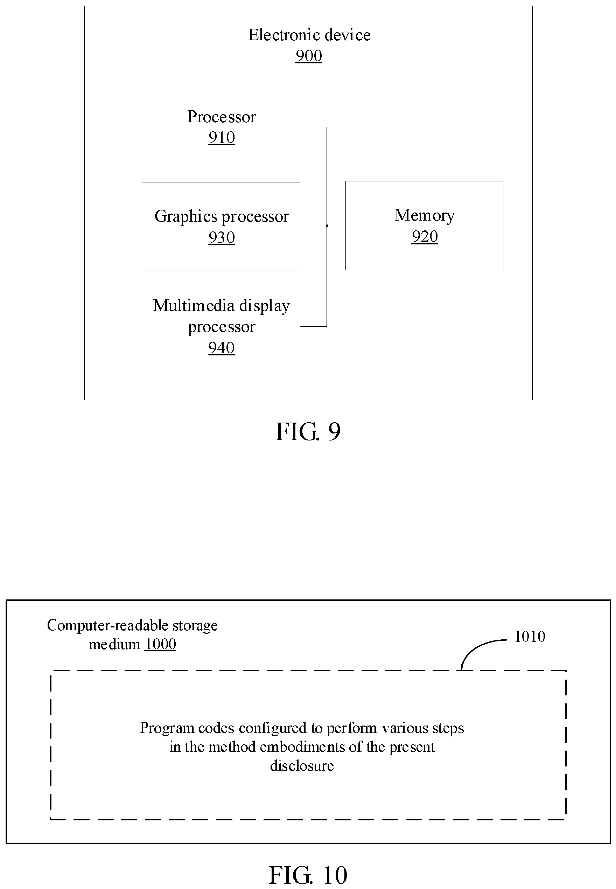

Refer to FIG. 9, which illustrates a structural block diagram of an electronic device provided by an embodiment of the present disclosure. The electronic device 900 can be an electronic device capable of running application programs, such as a smart phone, a tablet computer, an e-book and so on. The electronic device 900 of the present disclosure can include one or more of the following components: a processor 910, a memory 120, a graphics processor 930, a multimedia display processor 940, and one or more application programs. The one or more application programs can be stored in the memory 920 and configured to be executed by the one or more processors 910. The one or more programs are configured to execute the methods described in the above-mentioned method embodiments.

The processor 910 can include one or more processing cores. The processor 910 connects every portion of the entire electronic device 900 via various interfaces and lines, and performs various functions and processes data of the electronic device 900, by executing instructions, programs, sets of codes, or sets of instructions stored in the memory 920 and invoking data stored in the memory 920. Optionally, the processor 910 can adopt at least one hardware form of a digital signal processing (DSP), a field-programmable gate array (FPGA), and a programmable logic array (PLA). The processor 110 can be integrated with one or more of a central processing unit (CPU), a graphics processing unit (GPU), a modem and so on. The CPU mainly deals with the operating system, user interfaces and applications. The GPU is responsible for rendering of display content. The modem is used for processing wireless communication. It can be understood that the above-mentioned modem may also not be integrated into the processor 910 and is implemented by a single communication chip.

The memory 920 can include a random access memory (RAM), and can include a read-only memory. The memory 920 can be used for storing instructions, programs, codes, sets of codes, or sets of instructions. The memory 920 can include a storage program area and a storage data area. The storage program area can store instructions for implementing the operating system, instructions for implementing at least one function (such as a touch function, a sound playback function, an image playback function and so on), instructions for implementing the methods of the above described embodiments and so on. The storage data area can store data (such as a phone book, audio and video data, chat recording data) created by the electronic device 900 during use.

The graphics processor 930 is a general graphics processor, which is much more powerful than an MDP in graphics processing. In addition to two-dimensional image processing, the graphics processor 930 can further perform 3D image processing, special effects and so on. However, power consumption is relatively high, and a plurality of layers can be superimposed at one time.

The multimedia display processor 940 is a dedicated display image processing unit which can perform conventional two-dimensional image processing. A main advantage is low power consumption, but cost is high. When layers which the MDP can superimpose at one time are more, FIFO pipes which are required inside the MDP are more. In a Qualcomm high-end platform, an MDP has 8 FIFO pipes and can superimpose up to 8 layers at one time. In a Qualcomm middle-end or low-end platform, an MDP has only 4 FIFO pipes and can superimpose up to 4 layers at one time.

Refer to FIG. 10, which illustrates a structural block diagram of a computer-readable storage medium provided by an embodiment of the present disclosure. Program codes are stored in the computer-readable storage medium 1000, and the program codes can be invoked by a processor to execute the methods described in the above-mentioned method embodiments.

The computer readable storage medium 1000 can be an electronic memory, such as a flash memory, an electrically erasable programmable read only memory (EEPROM), an EPROM, a hard disk, a ROM and son on. Optionally, the computer-readable storage medium 1000 includes a non-transitory computer-readable storage medium. The computer-readable storage medium 1000 has a storage space for executing program codes 1010 which are configured to perform any of the method steps described above. The program codes can be read from or written to one or more computer program products. The program codes 1010 can be compressed, for example, in a suitable form.

Finally, it should be noted that the above-mentioned embodiments are only used to explain the technical solutions of the present disclosure, and are not limited thereto. Although the present disclosure is described in detail with reference to the above-mentioned embodiments, those skilled in the art understand that the technical solutions described in the above-mentioned embodiments can be modified, or some of the technical features can be equivalently replaced. The modifications and substitutions do not drive the essence of the corresponding technical solutions from the spirit and scope of the technical solutions of the embodiments of the present disclosure.

## Claims

1. A display method, **characterized by** being for an electronic device, the electronic device comprising a multimedia display processor and a graphics processor, the method comprising:
obtaining a layer to be synthesized, wherein the layer to be synthesized comprises an interface layer of a video playback interface and a multimedia layer corresponding to a video used for being played in the video playback interface;
obtaining a layer to be mixed by calling the graphics processor to synthesize the interface layer;
obtaining a target image by calling the multimedia display processor to synthesize the multimedia layer and the layer to be mixed; and
displaying the target image on the video playback interface.

2. The method of claim 1, **characterized in that** after the obtaining the layer to be mixed by calling the graphics processor to synthesize the interface layer, the method further comprises:
storing the layer to be mixed in a frame buffer module.

3. The method of claim 2, **characterized in that** the frame buffer module comprises a temporary frame buffer module, after the storing the layer to be mixed in the frame buffer module comprises:
storing the layer to be mixed in the temporary frame buffer module; and
retaining the layer to be mixed which is stored in the temporary frame buffer module, after the target image is displayed on the video playback interface.

4. The method of claim 3, **characterized in that** the obtaining the layer to be mixed by calling the graphics processor to synthesize the interface layer comprises:
judging whether the interface layer is the same as an interface layer obtained last time; and
obtaining the layer to be mixed by calling the graphics processor to synthesize the interface layer, when the interface layer is not the same as the interface layer obtained last time.

5. The method of claim 3, **characterized in that** the obtaining the layer to be mixed by calling the graphics processor to synthesize the interface layer comprises:
judging whether the interface layer is the same as interface layers obtained preset times before; and
obtaining the layer to be mixed by calling the graphics processor to synthesize the interface layer, when the interface layer is not the same as the interface layers obtained preset times before.

6. The method of claim 5, **characterized in that** the judging whether the interface layer is the same as the interface layers obtained preset times before, and the obtaining the layer to be mixed by calling the graphics processor to synthesize the interface layer, when the interface layer is not the same as the interface layers obtained preset times before comprise:
judging whether the interface layer is the same as a first interface layer, wherein the first interface layer is an interface layer which is obtained before the interface layer;
judging whether the interface layer is the same as a second interface layer, when the interface layer is not the same as the first interface layer, wherein the second interface layer is an interface layer which is obtained before the first interface layer; and
obtaining the layer to be mixed by calling the graphics processor to synthesize the interface layer, when the interface layer is not the same as the second interface layer.

7. The method of any one of claims 4-6, **characterized in that** after the obtaining the layer to be mixed by calling the graphics processor to synthesize the interface layer, the method further comprises:
deleting the layer which is obtained before the layer to be mixed obtained this time and is stored in the temporary frame buffer module.

8. The method of claim 6, **characterized in that** after the judging whether the interface layer is the same as the second interface layer, when the interface layer is the same as the first interface layer, the method further comprises:
determining a layer to be mixed corresponding to the second interface layer as the layer to be mixed which is used for synthesis this time, when the interface layer is the same as the second interface layer.

9. The method of claim 4, **characterized in that** after the judging whether the interface layer is the same as the interface layer obtained last time, the method further comprises:
determining the layer to be mixed which is stored in the temporary frame buffer module last time as the layer to be mixed which is used for synthesis this time, when the interface layer is the same as the interface layer obtained last time.

10. The method of claim 2, **characterized in that** the multimedia layer comprises at least one bullet screen layer and a video layer, the obtaining the target image by calling the multimedia display processor to synthesize the multimedia layer and the layer to be mixed comprises:
judging whether a number of the at least one bullet screen layer is greater than a preset number;
obtaining a bullet screen layer to be mixed by calling the graphics processor to synthesize the at least one bullet screen layer, when the number of the at least one bullet screen layer is greater than the preset number; and
obtaining the target image by calling the multimedia display processor to synthesize the bullet screen layer to be mixed, the video layer, and the layer to be mixed.

11. The method of claim 10, **characterized in that** after the judging whether the number of the at least one bullet screen layer is greater than the preset number, the method further comprises:
obtaining the target image by calling the multimedia display processor to synthesize the multimedia layer and the layer to be mixed, when the number of the at least one bullet screen layer is not greater than the preset number.

12. The method of claim 10, **characterized in that** after the judging whether the number of the at least one bullet screen layer is greater than the preset number, the method further comprises:
judging whether a number of idle named pipes of the multimedia display processor is less than the number of the at least one bullet screen layer, when the number of the at least one bullet screen layer is not greater than the preset number;
obtaining the bullet screen layer to be mixed by calling the multimedia display processor to synthesize the at least one bullet screen layer, when the number of the idle named pipes of the multimedia display processor is not less than the number of the at least one bullet screen layer; and
obtaining the bullet screen layer to be mixed by calling the graphics processor to synthesize the at least one bullet screen layer, when the number of the idle named pipes of the multimedia display processor is less than the number of the at least one bullet screen layer.

13. The method of claim 12, **characterized in that** the obtaining the bullet screen layer to be mixed by calling the graphics processor to synthesize the at least one bullet screen layer, when the number of the idle named pipes of the multimedia display processor is less than the number of the at least one bullet screen layer, the method further comprises:
obtaining a first bullet screen layer to be mixed by calling the multimedia display processor to synthesize the at least one bullet screen layer having the same number as the number of the idle named pipes, when the number of the idle named pipes of the multimedia display processor is less than the number of the at least one bullet screen layer;
obtaining a second bullet screen layer to be mixed by calling the graphics processor to synthesize at least one remaining bullet screen layer more than the number of the idle named pipes; and
obtaining the bullet screen layer to be mixed by synthesizing the first bullet screen layer to be mixed and the second bullet screen layer to be mixed.

14. The method of any one of claims 10-13, **characterized in that** the number of the at least one bullet screen layer is a number of at least one bullet screen corresponding to greater than a preset number corresponding to a video image obtained this time.

15. The method of claim 10 or 11, **characterized in that** the preset number is determined according to a number of named pipes of the multimedia display processor.

16. The method of claim 10 or 11, **characterized in that** the preset number is determined according to a number of idle named pipes of the multimedia display processor.

17. The method of claim 10, **characterized in that** the frame buffer module comprises a non-temporary frame buffer module, after the obtaining the bullet screen layer to be mixed by calling the graphics processor to synthesize the at least one bullet screen layer, when the number of the at least one bullet screen layer is greater than the preset number, the method further comprises:
storing the bullet screen layer to be mixed in the non-temporary frame buffer module; and
deleting the layer stored in the non-temporary frame buffer module, after the displaying the target image on the video playback interface.

18. A display device, **characterized by** being for an electronic device, the electronic device comprising a multimedia display processor and a graphics processor, the device comprising:
an image obtaining module configured to obtain a layer to be synthesized, wherein the layer to be synthesized comprises an interface layer of a video playback interface and a multimedia layer corresponding to a video used for being played in the video playback interface;
a first synthesis module configured to obtain a layer to be mixed by calling the graphics processor to synthesize the interface layer;
a second synthesis module configured to obtain a target image by calling the multimedia display processor to synthesize the multimedia layer and the layer to be mixed; and
an image display module configured to display the target image on the video playback interface.

19. An electronic device, **characterized by** comprising:
one or more processors;
a memory;
a graphics processor;
a multimedia display processor; and
one or more application programs, wherein the one or more application programs are stored in the memory and configured to be executed by the one or more processors, and the one or more programs are configured to execute the method of any one of claims 1-17.

20. A computer-readable medium, **characterized in that** the computer-readable medium comprises program codes stored thereon, the program codes are invoked by a processor to execute the method of any one of claims 1-17.
